# EUROPEAN PATENT SPECIFICATION

(11) **EP 2 785 953 B1**
(45) Date of publication and mention of the grant of the patent: **24.02.2016**
(21) Application number: 12853552.3
(22) Date of filing: 03.12.2012
(51) Int. Cl.: B66D 1/14, B23P 6/00, B66D 1/08, E21B 19/08, E21B 19/084, E21B 19/22

(54) **QUICK DRUM CONNECT**
SCHNELLE VERBINDUNG VON TROMMELN
RACCORD DE TAMBOUR RAPIDE

(30) Priority: 02.12.2011 US 201161566446 P
(43) Date of publication of application: 08.10.2014
(73) Proprietor: Services Pétroliers Schlumberger, 75007 Paris (FR); Schlumberger Holdings Limited, Road Town, Tortola 1110 (VG); Schlumberger Technology B.V., 2514 JG The Hague (NL); PRAD Research and Development Limited, Tortola 1110 (VG)
(72) Inventor: AUBRY, Dominique, F-80490 Hallencourt (FR)
(74) Representative: Schlumberger Cambridge Research Limited
(86) International application number: PCT/US2012/067568
(87) International publication number: WO 2013/082584

(56) References cited:
- EP-A2- 0 708 226
- CN-U- 201 890 733
- CN-Y- 201 381 190
- DE-A1- 2 308 809
- JP-A- 2000 063 086
- JP-A- 2001 199 688
- US-A- 2 289 387
- US-A- 2 766 588
- US-A1- 2008 185 139
- US-A1- 2010 243 784
- US-A1- 2010 314 132
- US-A1- 2011 108 289

## Description

### FIELD OF THE INVENTION

Disclosed embodiments relate generally to wellbore cabling systems and more particularly to a winch assembly having a removable drum for reeling wireline, slick line and/or coiled tubing.

### BACKGROUND INFORMATION

Hydrocarbons, such as oil and natural gas, are obtained from subterranean formations by drilling wellbores that penetrate the hydrocarbon bearing formations. Such drilling operations commonly make use of cables and coiled tubing which are wound upon a drum (or spool) and installed near the wellbore.

On occasion, the drum assembly may need to be changed for a different drum assembly (such as one with a longer or shorter cable or the like). In logging operations, it is not uncommon to change the drum from the logging unit a few times during the operation. These drum changes can be difficult and time-consuming operations with a number of steps required to disconnect the drum assembly from equipment adjacent the wellbore. Lost rig time can therefore be considerable. The changeover can also be dangerous to drilling personnel and may be further complicated by the location of the wellbore and environmental conditions associated with that location (e.g., wind, waves, and cold temperatures on an offshore platform). It is therefore desirable to improve the operation wellbore drum assemblies so as to simplify drum change operations.

The document CN 201890733 U (BEIJING CSR TIMES LOCOMOTIVE & ROLLING STOCK MECHANICS CO LTD discloses a winch drive assembly comprising: a drum having a cylindrical spool located axially between a first hollow annular flange and a second substantially circular flange having a central axle; a hydraulic motor; a braking system; and a support member releasably engaging the central axle of the second flange of the drum.

### SUMMARY

A disclosed winch drive assembly includes a drum having a cylindrical spool located axially between a first hollow annular flange and a second substantially circular flange having a central axle. A hydraulic motor has an inner stator and an outer rotor, the outer rotor of which releasably engages the first hollow annular flange of the drum. A braking system is positioned adjacent the outer rotor of the hydraulic motor and a support member releasably engages the central axle of the second flange of the drum.

A disclosed method for removing a drum from a winch drive assembly includes removing a braking system from the winch drive assembly, disengaging a hydraulic motor from the drum and removing the hydraulic motor from the winch drive assembly, and disengaging the drum from a support member and removing the drum from the winch drive assembly. The method may further include replacing the removed drum with a new drum, for example, via engaging an axle in a flange on the new drum with the support member, engaging an outer rotor of the hydraulic motor with an inner surface of a hollow flange on the new drum, and positioning the braking system in place adjacent to the hydraulic motor such that a brake band is deployed about the outer rotor of the hydraulic motor.

The disclosed embodiments may provide various technical advantages. For example, the disclosed winch assembly simplifies drum replacement procedures via reducing the number of components that need to be connected and disconnected. As a result, the time and expense required for a drum replacement operation are reduced. Moreover, the simplified operation is expected to improve safety.

This summary is provided to introduce a selection of concepts that are further described below in the detailed description. This summary is not intended to identify key or essential features of the claimed subject matter, nor is it intended to be used as an aid in limiting the scope of the claimed subject matter.

### BRIEF DESCRIPTION OF THE DRAWINGS

For a more complete understanding of the disclosed subject matter, and advantages thereof, reference is now made to the following descriptions taken in conjunction with the accompanying drawings, in which:
FIG. 1 depicts one example of a rig on which disclosed tool embodiments may be utilized.
FIG. 2 depicts an exploded view of one example of a disclosed winch assembly.
FIGS 3A and 3B depict flow charts of disclosed methods for removing a drum from a winch drive assembly (FIG. 3A) and for deploying a new drum in a winch drive assembly (FIG. 3B).

### DETAILED DESCRIPTION

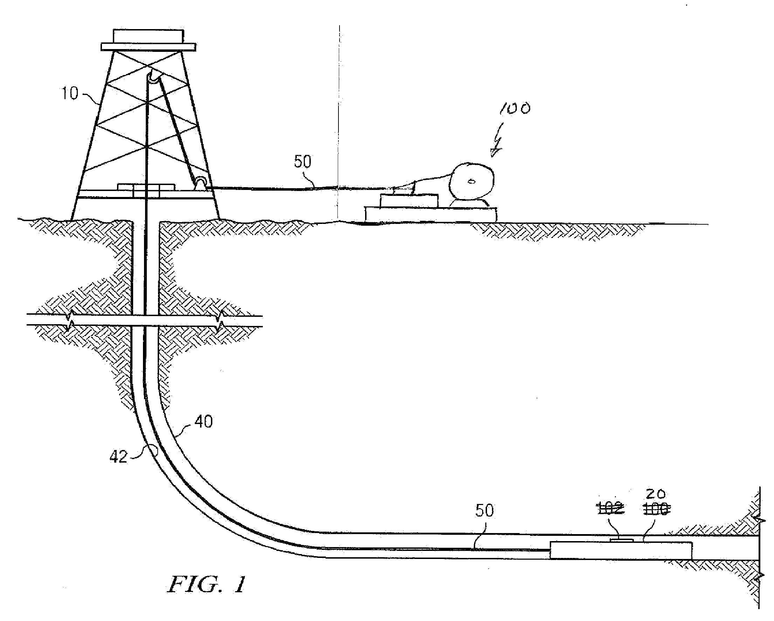

FIG. 1 depicts a drilling rig 10 suitable for employing certain downhole tool embodiments disclosed herein. In the depiction, a rig 10 is positioned over (or in the vicinity of) a subterranean oil or gas formation (not shown). The rig may include, for example, a derrick and a hoisting apparatus for lowering and raising various components into and out of the wellbore 40. A downhole tool 20 (e.g., a wireline or slick line tool) is deployed in the wellbore 40. The downhole tool may be connected to the surface, for example, via a wireline or slick line cable 50 which is in turn coupled to and at least partially coiled about the drum of a winch drive assembly 100.

During various wellbore operations downhole tool 20 may be lowered into the wellbore 40. In a highly deviated borehole, the tool 20 may alternatively or additionally be driven or drawn into the borehole using, for example, a downhole tractor or other conveyance means. The disclosed embodiments are not limited in this regard. Downhole tool 20 may also be conveyed into the borehole 40 using coiled tubing or other coiled conveyance.

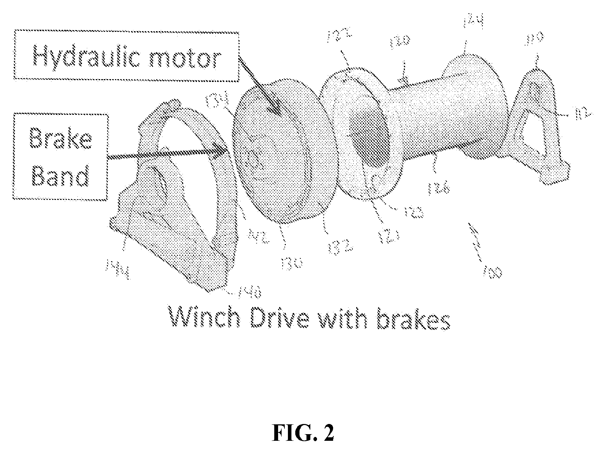

FIG. 2 depicts an exploded view of winch drive assembly 100. The assembly includes a drum 120 having a cylindrical spool 126 for carrying a conveyance such as wireline, slick line, or coiled tubing. The drum 120 further includes a first large diameter hollow flange 122 on a first longitudinal end and a second closed flange 124 having an axle (not shown) on a second axially opposed longitudinal end. The axle of the second flange may be supported and releasably engaged by axle support 112 in support member 110. A hydraulic motor 130 having an inner stator 134 and an outer rotor 132 releasably engages the first flange 122 on the drum 120 such that hydraulic actuation of the rotor 122 causes rotation of the drum 120 about its cylindrical axis 121. The hydraulic motor 130 may include, for example, a hydraulic pump and a motor assembly. In the depicted embodiment a portion of the outer rotor 132 of the hydraulic motor 130 engages an inner surface 123 of the first flange 122. The outer rotor 132 of the hydraulic motor 130 may alternatively engage an axial face of the first flange 122.

A braking system 140 including a brake band 142 is deployed about the hydraulic motor 130. Loosening of the brake band 142 allows for hydraulic actuation and rotation of the rotor 132. The brake band 142 may be tightened using conventional means to slow or stop rotation of the drum 120. Braking system 140 further includes a circular support 144 that supports inner stator 134 of the hydraulic motor 130.

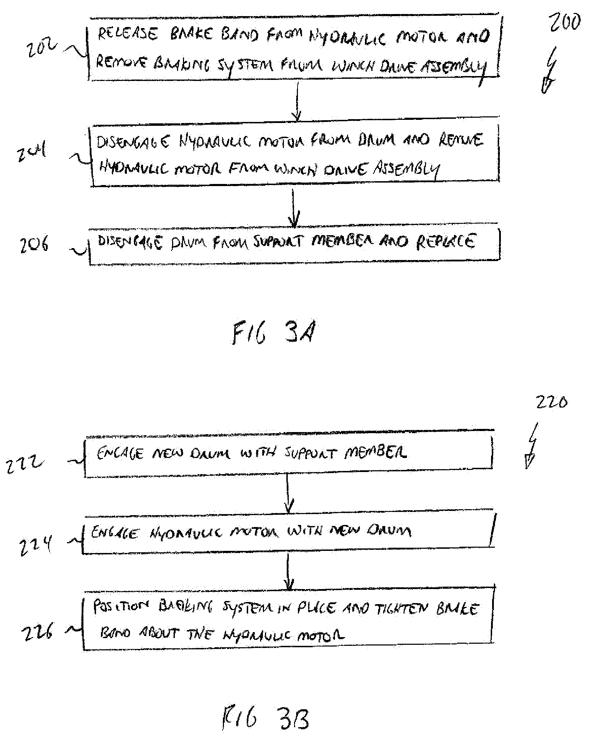

FIGS 3A and 3B depict flow charts of disclosed methods 200 and 220 for removing the drum 120 from winch drive assembly 100 (FIG. 3A) and for deploying a new drum in the winch drive assembly 100 (FIG. 3B). At 202 of method 200 the brake band 142 is released (or loosened) from about the rotor 132 of the hydraulic motor 130. The braking system 140 may then be removed from the winch drive assembly 100, for example via a crane or other lift or hoisting mechanism. At 204 the rotor 132 of the hydraulic motor 130 may be released (disengaged) from the first flange 122 of the drum 120. The hydraulic motor 130 may then also be removed from the winch drive assembly 100. The drum 120 may then be disengaged from the support member 110 (e.g., via disengaging the axle on flange 124 from the support member) and removed from the assembly and replaced with a new drum (e.g., including additional or different conveyance).

At 222 of method 220 (FIG. 3B), the axle (not shown) of the second flange 124 of the new drum may be engaged with the support member 110. The rotor 132 of the hydraulic motor 130 may then be engaged with the first flange 122 of the new drum. The braking system 140 may then be positioned in place with the brake band 142 deployed about the rotor 132 of the hydraulic motor and support 144 supporting the stator 134. The brake band 142 may then be tightened as required, for example, to either provide braking or rotation of the drum 120.

With reference again to FIG. 1 it will be understood that substantially any suitable conveyance may be spooled about drum 120. The conveyance may include, for example, a wireline cable, a slick line cable, coiled tubing, and/or the like. Moreover, winch drive assembly 100 may be utilized in substantially any suitable wellbore servicing operation, for example, including a logging operation, a perforating operation, a completion operation, and the like. The disclosed embodiments are not limited to any particular conveyance or wellbore servicing operation.

Although a quick drum connect and methods for removing and/or replacing the drum in a winch drive assembly and certain advantages thereof have been described in detail, it should be understood that various changes, substitutions and alternations can be made herein without departing from the scope of the disclosure, within the limits of the appended claims.

## Claims

1. A winch drive assembly (100) comprising:
a drum (120) having a cylindrical spool (126) located axially between a first hollow annular flange (122) and a second substantially circular flange (124) having a central axle;
a hydraulic motor (130) having an inner stator (134) and an outer rotor, the outer rotor (132) releasably engaging the first hollow annular flange (122) of the drum;
a braking system (140) positioned adjacent the outer rotor (132) of the hydraulic motor; and
a support member (110) releasably engaging the central axle of the second flange of the drum.

2. The winch drive assembly of claim 1, wherein the hydraulic motor (130) comprises a hydraulic pump and a motor assembly.

3. The winch drive assembly of claim 1, wherein the outer rotor (132) of the hydraulic motor engages an inner surface (123) of the first hollow annular flange (122) of the drum.

4. The winch drive assembly of claim 1, wherein the braking system (140) comprises a brake band (142) deployed about the outer rotor (132) of the hydraulic motor.

5. The winch drive assembly of claim 1, wherein the inner stator (134) engages a circular support (144) in the braking system.

6. The winch drive assembly of claim 1, further comprising a conveyance deployed on the spool (126) of the drum.

7. A method for removing a drum from a the winch drive assembly (100) as defined in claim 1, the method comprising:
(a) removing the braking system (140) from the winch drive assembly;
(b) disengaging the hydraulic motor (130) from the drum (120) and removing the hydraulic motor (130) from the winch drive assembly;
(c) disengaging the drum (120) from the support member (110) and removing the drum (120) from the winch drive assembly.

8. The method of claim 7, wherein (a) further comprises releasing a braking band (142) from engagement with the outer rotor (132) of the hydraulic motor (130) prior to removing the braking system (140) from the winch drive assembly.

9. The method of claim 7, wherein the outer rotor (132) of the hydraulic motor (130) is disengaged from engagement with the inner surface (123) of then hollow flange (124) on the drum (120) prior to removing the hydraulic motor (130) from the winch assembly in (b).

10. The method of claim 7, wherein disengaging the drum (120) from the support member (110) in (c) comprises disengaging the central axle in the drum flange (124) from the support member.

11. The method of claim 7, further comprising:
(d) replacing the drum (120) that was removed in (c) with a new drum.

12. The method of claim 11, wherein replacing the drum in (d) comprises:
(i) engaging the new drum with the support member (110);
(ii) engaging the hydraulic motor (130) with the new drum; and
(iii) positioning the braking system (140) in place adjacent to the hydraulic motor (130).

13. The method of claim 11, wherein replacing the drum in (d) comprises:
(i) engaging an axle an in a flange on the new drum with the support member (110);
(ii) engaging the outer rotor (132) of the hydraulic motor (130) with an inner surface of a hollow flange on the new drum; and
(iii) positioning the braking system (140)in place adjacent to the hydraulic motor (130) such that the brake band (142) is deployed about the outer rotor (132) of the hydraulic motor.

## Patentansprüche

1. Windenantriebsbaugruppe (100), umfassend:
eine Trommel (120) mit einer zylindrischen Spule (126), die axial zwischen einem ersten hohlen ringförmigen Flansch (122) und einem zweiten, im Wesentlichen kreisförmigen Flansch (124), der eine zentrale Achse aufweist, angeordnet ist;
einen Hydromotor (130) mit einem inneren Stator (134) und einem äußeren Rotor, wobei der äußere Rotor (132) lösbar in den ersten hohlen ringförmigen Flansch (122) der Trommel eingreift;
ein Bremssystem (140), das benachbart zum äußeren Rotor (132) des Hydromotors positioniert ist; und
ein Trägerelement (110), das lösbar in die zentrale Achse des zweiten Flansches der Trommel eingreift.

2. Windenantriebsbaugruppe nach Anspruch 1, wobei der Hydromotor (130) eine Hydraulikpumpe und eine Motorbaugruppe umfasst.

3. Windenantriebsbaugruppe nach Anspruch 1, wobei der äußere Rotor (132) des Hydromotors in eine Innenoberfläche (123) des ersten hohlen ringförmigen Flansches (122) der Trommel eingreift.

4. Windenantriebsbaugruppe nach Anspruch 1, wobei das Bremssystem (140) ein Bremsband (142) umfasst, das um den äußeren Rotor (132) des Hydromotors herum eingesetzt wird.

5. Windenantriebsbaugruppe nach Anspruch 1, wobei der innere Stator (134) in einen kreisförmigen Träger (144) im Bremssystem eingreift.

6. Windenantriebsbaugruppe nach Anspruch 1, ferner umfassend eine Zuführung, die auf der Spule (126) der Trommel eingesetzt wird.

7. Verfahren zum Entfernen einer Trommel von der Windenantriebsbaugruppe (100), wie in Anspruch 1 definiert, wobei das Verfahren Folgendes umfasst:
(a) Entfernen des Bremssystems (140) von der Windenantriebsbaugruppe;
(b) Außer-Eingriff-Bringen des Hydromotors (130) von der Trommel (120) und Entfernen des Hydromotors (130) von der Windenantriebsbaugruppe;
(c) Außer-Eingriff-Bringen der Trommel (120) vom Trägerelement (110) und Entfernen der Trommel (120) von der Windenantriebsbaugruppe.

8. Verfahren nach Anspruch 7, wobei (a) ferner ein Trennen eines Bremsbands (142) aus der Verbindung mit dem äußeren Rotor (132) des Hydromotors (130) vor dem Entfernen des Bremssystems (140) von der Windenantriebsbaugruppe umfasst.

9. Verfahren nach Anspruch 7, wobei der äußere Rotor (132) des Hydromotors (130) außer Eingriff mit der Innenoberfläche (123) des hohlen Flansches (124) an der Trommel (120) gebracht wird, bevor der Hydromotor (130) in (b) von der Windenantriebsbaugruppe entfernt wird.

10. Verfahren nach Anspruch 7, wobei das Außer-Eingriff-Bringen der Trommel (120) von dem Trägerelement (110) in (c) das Außer-Eingriff-Bringen der zentralen Achse im Trommelflansch (124) vom Trägerelement umfasst.

11. Verfahren nach Anspruch 7, ferner umfassend:
(d) Austauschen der Trommel (120), die in (c) entfernt wurde, durch eine neue Trommel.

12. Verfahren nach Anspruch 11, wobei das Austauschen der Trommel in (d) Folgendes umfasst:
(i) In-Eingriff-Bringen der neuen Trommel mit dem Trägerelement (110);
(ii) In-Eingriff-Bringen des Hydromotors (130) mit der neuen Trommel; und
(iii) Positionieren des vorhandenen Bremssystems (140) benachbart zum Hydromotor (130).

13. Verfahren nach Anspruch 11, wobei das Austauschen der Trommel in (d) Folgendes umfasst:
(i) In-Eingriff-Bringen einer Achse in einem Flansch an der neuen Trommel mit dem Trägerelement (110);
(ii) In-Eingriff-Bringen des äußeren Rotors (132) des Hydromotors (130) mit einer Innenoberfläche eines hohlen Flansches an der neuen Trommel; und
(iii) Positionieren des vorhandenen Bremssystems (140) benachbart zu dem Hydromotor (130) derart, dass das Bremsband (142) um den äußeren Rotor (132) des Hydromotors herum eingesetzt wird.

## Revendications

1. Ensemble d'entraînement de treuil (100) comprenant :
un tambour (120) possédant une bobine cylindrique (126) située axialement entre un premier rebord annulaire creux (122) et un deuxième rebord essentiellement circulaire (124) possédant un axe central;
un moteur hydraulique (130) possédant un stator interne (134) et un rotor externe, le rotor externe (132) venant en prise de manière libérable avec le premier rebord annulaire creux (122) du tambour;
un système de freinage (140) positionné adjacent au rotor externe (132) du moteur hydraulique; et
un élément de support (110) venant en prise de manière libérable avec l'axe central du deuxième rebord du tambour.

2. Ensemble d'entraînement de treuil selon la revendication 1, dans lequel le moteur hydraulique (130) comprend une pompe hydraulique et un groupe moteur.

3. Ensemble d'entraînement de treuil selon la revendication 1, dans lequel le rotor externe (132) du moteur hydraulique vient en prise avec une surface interne (123) du premier rebord annulaire creux (122) du tambour.

4. Ensemble d'entraînement de treuil selon la revendication 1, dans lequel le système de freinage (140) comprend une bande de freinage (142) déployée autour du rotor externe (132) du moteur hydraulique.

5. Ensemble d'entraînement de treuil selon la revendication 1, dans lequel le stator interne (134) vient en prise avec un support circulaire (144) dans le système de freinage.

6. Ensemble d'entraînement de treuil selon la revendication 1, comprenant en outre un moyen de transport déployé sur la bobine (126) du tambour.

7. Procédé de retrait d'un tambour d'un ensemble d'entraînement de treuil (100) selon la revendication 1, le procédé comprenant :
(a) le retrait du système de freinage (140) de l'ensemble d'entraînement de treuil;
(b) le désaccouplement du moteur hydraulique (130) du tambour (120) et le retrait du moteur hydraulique (130) de l'ensemble d'entraînement de treuil;
(c) le désaccouplement du tambour (120) de l'élément de support (110) et le retrait du tambour (120) de l'ensemble d'entraînement de treuil.

8. Procédé selon la revendication 7, dans lequel (a) comprend en outre la libération d'une bande de freinage (142) de la mise en prise avec le rotor externe (132) du moteur hydraulique (130) avant le retrait du système de freinage (140) de l'ensemble d'entraînement de treuil.

9. Procédé selon la revendication 7, dans lequel le rotor externe (132) du moteur hydraulique (130) est désaccouplé de la mise en prise avec la surface interne (123) du rebord creux (124) sur le tambour (120) avant le retrait du moteur hydraulique (130) de l'ensemble de treuil en (b).

10. Procédé selon la revendication 7, dans lequel le désaccouplement du tambour (120) de l'élément de support (110) en (c) comprend le désaccouplement de l'axe central dans le rebord de tambour (124) de l'élément de support.

11. Procédé selon la revendication 7, comprenant en outre :
(d) le remplacement du tambour (120) qui a été retiré en (c) par un nouveau tambour.

12. Procédé selon la revendication 11, dans lequel le remplacement du tambour en (d) comprend :
(i) la mise en prise du nouveau tambour avec l'élément de support (110);
(ii) la mise en prise du moteur hydraulique (130) avec le nouveau tambour; et
(iii) le positionnement du système de freinage (140) en place à côté du moteur hydraulique (130).

13. Procédé selon la revendication 11, dans lequel le remplacement du tambour en (d) comprend :
(i) la mise en prise d'un axe dans un rebord sur le nouveau tambour avec l'élément de support (110) ;
(ii) la mise en prise du rotor externe (132) du moteur hydraulique (130) avec une surface interne d'un rebord creux sur le nouveau tambour; et
(iii) le positionnement du système de freinage (140) en place à côté du moteur hydraulique (130) de telle sorte que la bande de freinage (142) soit déployée autour du rotor externe (132) du moteur hydraulique.
